Europäisches Patentamt

European Patent Office

Office européen des brevets

(19)

(11) Numéro de publication: **0 229 854**
**B1**

(12) # FASCICULE DE BREVET EUROPEEN

(45) Date de publication du fascicule du brevet:
19.09.90

(21) Numéro de dépôt: 85201769.8

(22) Date de dépôt: 31.10.85

(51) Int. Cl.⁵: **C04B 14/20**, E06B 5/16,
H05B 3/10, H05B 6/24,
F27B 14/10

(54) **Appareil de chauffage équipé d'une couche en vermiculite.**

(43) Date de publication de la demande:
29.07.87 Bulletin 87/31

(45) Mention de la délivrance du brevet:
19.09.90 Bulletin 90/38

(84) Etats contractants désignés:
AT BE CH DE FR GB IT LI LU NL SE

(56) Documents cités:
DE-A- 2 834 548
FR-A- 1 474 167
FR-A- 2 559 573
GB-A- 21 560
US-A- 1 918 586
US-A- 2 218 965
US-A- 3 466 222
US-A- 4 159 302

(73) Titulaire: **S.A. Compagnie Royale Asturienne des Mines
(C.R.A.M), Avenue Louise, 54, B-1050 Bruxelles(BE)**

(72) Inventeur: **Dubois, André, Avenue de Floride 98,
B-1180 Uccle(BE)**
Inventeur: **Mormont, Daniel, Avenue Général
Kellerman 16, B-1420 Braine l'Alleud(BE)**

(74) Mandataire: **Van Malderen, Michel et al, p.a. Freylinger &
Associés 22 avenue J.S. Bach (bte 43),
B-1080 Bruxelles(BE)**

ACTORUM AG

## Description

Il est notoirement connu d'utiliser des matériaux expansés comme couches calorifuges, isolantes électriques ou amortissant le son. Il est connu également d'utiliser la vermiculite expansée.

La présente invention se rapporte à l'utilisation de la vermiculite où de matières similaires. Elle est relative au fait que la vermiculite, non expansée, est maintenue en forme de couche et qu'après la mise en place de la couche, l'expansion de la vermiculite suite à une élévation de la température sensiblement au dessus de 120°C est prévue et réalisée, à un moment déterminé.

Elle vise plus particulièrement à fournir un appareil de chauffage dans lequel est assurée une bonne transmission de chaleur entre la résistance chauffante et la paroi chauffante.

L'invention définie dans les revendications profite d'une propriété naturelle de la vermiculite qui à des températures au dessus de 120°C commence à perdre ou à dégager au moins une partie de son eau de cristallisation et de subir une expansion d'autant plus importante que la température est élevée et est maintenue pendant un temps plus long.

Cette expansion peut ainsi atteindre une augmentation du volume par rapport au volume initial approchant un facteur 20. D'autres matériaux présentant cette propriété de subir une expansion à la chaleur sont considérés ici comme matériaux similaires à la vermiculite.

L'application de la température élevée qui produit l'expansion peut se faire par exemple lors de la fabrication d'un appareil, par exemple d'un appareil de chauffage, soit au moyen d'une source de chaleur extérieure, soit par la source de chaleur constituée par celle de l'appareil de chauffage même.

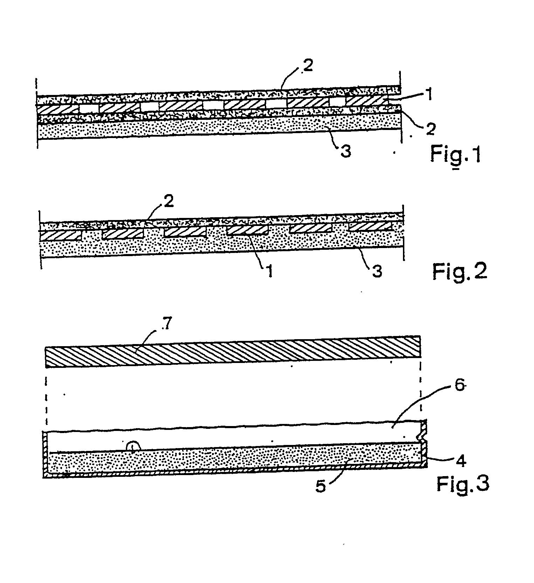

L'invention est expliquée ci-dessous par rapport à quelques exemples de mise en œuvre, en se référant au dessin annexé pour certains de ces exemples. Les figures 1 à 3 du dessin montrent des coupes à travers des éléments ou appareils chauffants.

Les particules de vermiculite non expansée sont amenées à former une pulpe dont on obtient par calandrage une feuille ou des rubans souples dans lesquels la cohésion entre les particules est assurée par un liant inorganique ou organique ajouté à un moment propice pendant la fabrication.

En variante, les particules de vermiculite non expansée sont solidarisées au moyen d'un liant inorganique ou organique avec un support rigide ou souple. Un support souple peut être constitué notamment par une feuille ou ruban en papier de mica dont la cohésion est assurée par une faible quantité de liant résistant à la chaleur. Ces supports souples peuvent en outre être associés à une couche de feutre de fibres céramiques. La cohésion du feutre et son assujetissement au papier de mica peuvent à nouveau être assurés au moyen d'un liant résistant à la chaleur. L'intégration d'une proportion déterminée de vermiculite non expansée dans le feutre de fibres de céramique ou le remplacement du feutre de fibres de céramique par de la vermiculite non expansée est rendue mécaniquement stable grâce à l'incorporation d'un liant résistant à la chaleur.

Selon une autre forme d'exécution, les particules de vermiculite non expansée sont emprisonnées entre deux couches rigides ou souples de même nature ou de nature différente. Les couches emprisonnant les particules de vermiculite peuvent être par exemple des tissus ou feutres en fibres de verre ou d'amiante réunis entre eux par des piqûres de matelassage. Une des couches emprisonnant les particules de vermiculite peut être un feuillard d'acier avec bords repliés ou un feuillard métallique gaufré et l'autre couche peut être un carton micacé à surface lisse. Dans ces derniers cas, la vermiculite peut rester meuble ou peut être agglomérée au moyen d'un liant inorganique ou organique.

La figure 1 montre une coupe agrandie d'une partie d'un élément chauffant composite comprenant une résistance électrique 1, par exemple un ruban métallique découpé en forme de grècque solidarisé avec deux feuilles isolantes minces 2, par exemple en papier de mica, et une couche de calorifuge 3 en vermiculite. Les particules de vermiculite sont solidarisées entre elles et avec une des feuilles isolantes 2 au moyen d'une faible quantité d'un liant, par exemple à base de résine silicone.

Il est possible évidemment de disposer séparément la résistance électrique protégée par les feuilles isolantes minces et une feuille ou un ruban en vermiculite.

La figure 2 montre une variante de la figure 1 dans laquelle la feuille isolante mince 2 entre la résistance 1 et la couche calorifuge 3 est omise.

La figure 3 montre, en coupe, un élément chauffant composite plus élaboré, comprenant, en outre, soit une paroi d'appui 4 sous forme de boîtier plat qui est rempli d'une couche 5 de vermiculite non expansée meuble recouverte d'une résistance électrique 6 emprisonnée entre deux feuilles minces de papier de mica suivant la figure 1 ou simplement doublée d'une feuille de papier de mica suivant la figure 2. L'élément chauffant composite comprenant la paroi 4, la couche 5 et la résistance 6 est solidarisé ensuite avec une paroi chauffante 7, par exemple une semelle de fer à repasser. La paroi 4 peut supporter en outre un agencement, non représenté, qui permet un raccordement facile des fils de connexion de la résistance 6.

Après l'assemblage comme décrit lors de l'explication de la figure 3, un traitement thermique est exécuté qui a pour but de produire l'expansion de la vermiculite. Ce traitement thermique peut se faire soit dans un four, soit lorsque la résistance électrique permet d'atteindre facilement des températures élevées, en mettant sous tension simplement la résistance électrique 6.

Lors de ce procédé, il est important de ménager un espace suffisant à la vermiculite expansée pour atteindre l'épaisseur de calorifugeage désirée. D'autre part, la quantité de vermiculite emprisonnée dans cet espace détermine la pression que la vermiculite expansée exerce ensuite sur la résistance pour l'appliquer fortement sur la paroi chauffante afin d'assurer une transmission parfaite de la chaleur.

Les appareils fabriqués comme décrit ci-dessus possèdent ainsi une paroi chauffante en contact intime avec une résistance électrique chauffante qui de l'autre côté est garnie d'une couche de calorifugeage en vermiculite expansée exerçant la pression nécessaire entre paroi chauffante et résistance électrique.

**Revendications**

1. Appareil de chauffage dans lequel un élément chauffant est appliqué sur une surface de chauffage, caractérisé en ce qu'il comporte, sur la face de l'élément chauffant opposée à celle appliquée sur la surface de chauffage, une couche de vermiculite expansée, après sa mise en place, par une élévation de température sensiblement au-dessus de 120°C.

2. Appareil de chauffage selon la revendication 1 caractérisé en ce que la couche de vermiculite consiste en une feuille ou ruban souple dans lequel la vermiculite est agglomérée au moyen d'un liant organique ou inorganique.

3. Appareil de chauffage selon la revendication 1 caractérisé en ce que la couche de vermiculite consiste en un support rigide ou souple sur lequel la vermiculite est fixée au moyen d'un liant organique ou inorganique, notamment une feuille ou ruban en papier de mica dont la cohésion est assurée par un liant résistant à la chaleur, éventuellement associé(e) à une couche de feutre de fibres céramiques.

4. Appareil de chauffage selon la revendication 1 caractérisé en ce que la couche de vermiculite consiste en des particules de vermiculite emprisonnées entre deux couches rigides ou souples, notamment des tissus ou feutres en fibres de verre ou d'amiante, éventuellement réunis entre eux par des piqûres de matelassage, un feuillard d'acier à bords repliés ou un feuillard métallique gaufré ou un carton micacé à surface lisse.

**Claims**

1. Heating apparatus in which a heating element is applied to a heating surface, characterized in that it comprises, on the face of the heating element away from that applied to the heating surface, a layer of vermiculite expanded, after it is placed in position, by a temperature rise appreciably above 120°C.

2. Heating apparatus according to Claim 1, characterized in that the layer of vermiculite consists of a flexible sheet or tape in which the vermiculite is agglomerated by means of an organic or inorganic binder.

3. Heating apparatus according to Claim 1, characterized in that the layer of vermiculite consists of a rigid or flexible support onto which the vermiculite is attached by means of an organic or inorganic binder, especially a sheet or tape made of mice paper whose cohesion is ensured by a heat-resistant binder, optionally associated with a layer of felt of ceramic fibres.

4. Heating apparatus according to Claim 1, characterized in that the layer of vermiculite consists of vermiculite particles trapped between two rigid or flexible layers, especially of fabrics or felts made of glass or asbestos fibres, optionally joined together by quilting stitches, a steel strip with folded edges or an embossed metal strip or a micaceous cardboard with a smooth surface.

**Patentansprüche**

1. Heizvorrichtung, bei der ein Heizelement auf einer Heizfläche angebracht ist, dadurch gekennzeichnet, daß sie auf der von der Heizfläche abgewandten Seite des Heizelementes eine Schicht aus Vermiculit aufweist, die nach ihrer Aufbringung durch Erwärmung auf eine deutlich über 120°C liegende Temperatur expandiert wird.

2. Heizvorrichtung gemäß Anspruch 1, dadurch gekennzeichnet, daß die Vermiculit-Schicht aus einer flexiblen Folie oder einem flexiblen Band besteht, bei denen der Vermiculit mittels eines organischen oder anorganischen Bindemittels gebunden wurde.

3. Heizvorrichtung gemäß Anspruch 1, dadurch gekennzeichnet, daß die Vermiculit-Schicht eine starre oder flexible Unterlage umfaßt, auf der der Vermiculit mittels eines organischen oder anorganischen Bindemittels befestigt ist, wobei diese Unterlage insbesondere aus einer Folie oder einem Band aus Glimmerpapier bestehen kann, deren Zusammenhalt durch ein wärmebeständiges Bindemittel, eventuell in Verbindung mit einer Filz- oder Keramikfaser-Schicht gewährleistet wird.

4. Heizvorrichtung gemäß Anspruch 1, dadurch gekennzeichnet, daß die Vermiculit-Schicht aus Vermiculit-Partikeln besteht, die zwischen zwei starren oder flexiblen Schichten, insbesondere Geweben oder Filzen aus Glas- oder Asbestfaser eingeschlossen sind, die eventuell durch Steppstiche, Stahlband mit umgebogenen Rändern, oder geprägtes Metallband oder Glimmerkarton zusammengehalten werden.

EP 0 229 854 B1

Fig.1

Fig.2

Fig.3